# EUROPEAN PATENT APPLICATION

(11) **EP 4 360 786 A1**
(43) Date of publication of application: **01.05.2024**
(21) Application number: 23205516.0
(22) Date of filing: 24.10.2023
(51) Int. Cl.: B23C 5/00, B23C 5/08, B23C 5/20

(54) **MULTI-SLOT ROTARY CUTTING TOOL**

(30) Priority: 25.10.2022 PT 2022118279
(71) Applicant: PALBIT S.A., 3850-582 Branca (Albergaria-a-Velha) (PT)
(72) Inventor: AMARAL DE FIGUEIREDO, Daniel, 3740-263 SEVER DO VOUGA (PT)
(74) Representative: Patentree

(57) **Abstract**

The present disclosure relates to a multiple-slot milling tool, i.e. a rotary cutting tool for machining slot openings in metal workpieces, and more particularly to a multi-slot milling tool having replaceable cutting inserts secured to a plurality of disc-shaped tool bodies arranged along a tool shaft. Namely, a rotary cutting tool for machining slot openings in metal workpieces, comprising: a tool shaft; one or more disc-shaped tool bodies arranged on the shaft to rotate with said shaft; each disc-shaped tool body comprising a plurality of insert mounting locations, each mounting location being arranged for receiving a cutting insert removably mounted thereon; wherein the insert mounting locations are mounted irregularly-spaced around the periphery of each disc-shaped tool body

## Description

### TECHNICAL FIELD

The present disclosure relates to a multiple-slot milling tool, i.e. a rotary cutting tool for machining slot openings in metal workpieces, and more particularly to a multi-slot milling tool having replaceable cutting inserts secured to a plurality of disc-shaped tool bodies arranged along a tool shaft.

### BACKGROUND

Convention tools for opening slot openings in metal workpieces are only able to machine a single slot at a time.

Document US3701187 discloses a cutting tool having ribbed cutting inserts providing scalloped cutting edges are spaced angularly around the periphery of a supporting disk and are staggered relative to one another along the axis of the disk to remove laterally spaced chips from the bottom of the slot while the sides of the slot are face milled by side cutting inserts spaced angularly from the ribbed inserts.

Simultaneously machining more than one slot normally creates unwanted vibrations, reducing work quality and/or imposing slower work speeds.

These facts are disclosed in order to illustrate the technical problem addressed by the present disclosure.

### GENERAL DESCRIPTION

The present disclosure relates to a multiple-slot milling tool, i.e. a rotary cutting tool for machining slot openings in metal workpieces, and more particularly to a multi-slot milling tool having replaceable cutting inserts secured to a plurality of disc-shaped tool bodies arranged along a tool shaft.

One of the problems addressed by the present disclosure includes the machining of multi-slot openings in workpieces efficiently. Another problem aimed at by the present disclosure includes the machining of multi-slot openings in workpieces with cutting quality. Prior art approaches are only able to machine a single slot at a time or when attempts were made under the present disclosure to adapt prior art embodiments to carry out multi-slot machinating, unwanted vibrations are generated, reducing work quality and/or imposing slower work speeds. A further problem addressed by the present disclosure includes the machining of multi-slot openings in multi-material workpieces efficiently and/or with cutting quality. Another problem tackled by the present disclosure includes machining slender structures that pose more serious challenges in terms of vibration, precision and finishing quality. A further problem addressed at by the present disclosure includes the durability and longevity of the tools. As disclosed, reducing vibration and unwanted juddering prolongs tool longevity.

An aspect of the present disclosure relates to a rotary cutting tool for machining slot openings in metal workpieces, comprising: a tool shaft; one or more disc-shaped tool bodies arranged on the shaft to rotate with said shaft; each disc-shaped tool body comprising a plurality of insert mounting locations, each mounting location being arranged for receiving a cutting insert removably mounted thereon; wherein the insert mounting locations are mounted irregularly-spaced around the periphery of each disc-shaped tool body.

In an embodiment, the rotary cutting tool of the present disclosure may comprise a plurality of said disc-shaped tool bodies.

In an embodiment, the insert mounting locations between the plurality of disc-shaped tool bodies are longitudinally unaligned.

In an embodiment, the rotary cutting tool of the present disclosure may comprise a proximal end of said tool shaft is arranged to be coupled to a milling machine and further comprising a stabilization body arranged on a distal end of said tool shaft.

In an embodiment, the rotary cutting tool of the present disclosure may further comprise a stabilization weight removably mounted on the stabilization body , in particular the stabilization body comprising a hollow body for receiving the stabilization weight.

In an embodiment, the rotary cutting tool of the present disclosure may comprise a resilient coupling between the stabilization body and the stabilization weight.

In an embodiment, the resilient coupling is partially or fully elastic.

In an embodiment, the resilient coupling has adjustable elasticity, in particular wherein the elastic coupling has an adjustable elastic constant.

In an embodiment, the resilient coupling may comprise a compressible polymeric part arranged to be compressed between the stabilization body and the stabilization weight.

In an embodiment, a retainer for retaining the stabilization weight coupled to the stabilization body and arranged to apply an adjustable compression to the resilient coupling.

In an embodiment, the retainer is a lid with a coupling thread for coupling to a corresponding coupling thread of the stabilization body.

In an embodiment, the retainer comprises a keyed receiving recess for receiving a keyed tool for screwing or unscrewing the retainer into or from the stabilization body.

In an embodiment, the rotary cutting tool of the present disclosure may further comprise a fixation nut for holding the disc-shaped tool bodies on the shaft.

In an embodiment, the stabilization body is arranged as a fixation nut for holding the disc-shaped tool bodies on the shaft.

In an embodiment, the rotary cutting tool of the present disclosure may further comprise the fixation nut or the stabilization body comprise a coupling thread for coupling to a corresponding coupling thread of the tool shaft.

In an embodiment, the rotary cutting tool of the present disclosure may further comprise guiding protrusions and matching recesses between the stabilization body and the stabilization weight for guiding longitudinally the stabilization weight in respect of the stabilization body.

In an embodiment, the rotary cutting tool is a slot milling tool.

In the present disclosure, the tool shaft defines a longitudinal axis of the rotary cutting tool.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

Where elements are described as being connected or connectable, they may be directly connected. Where elements are described as being coupled or couplable, they may be linked by one or more intervening or interposing elements.

### BRIEF DESCRIPTION OF THE DRAWINGS

The following figures provide preferred embodiments for illustrating the disclosure and should not be seen as limiting the scope of invention.
**Figure 1** shows a perspective view of a schematic representation of an embodiment of the disclosed rotary cutting tool.
**Figure 2** shows a lateral (a) and a cross-sectional (b) view of a schematic representation of an embodiment of the disclosed rotary cutting tool.
**Figure 3** shows an exploded view of a schematic representation of an embodiment of the disclosed rotary cutting tool.
**Figure 4** shows a lateral (a) and a cross-sectional (b) view of a schematic representation of an embodiment of the disclosed stabilization body.
**Figure 5** shows a perspective view of a schematic representation of an embodiment of the disclosed rotary cutting tool.
**Figure 6** shows a perspective view of a schematic representation of a multi-material workpiece of the present disclosure.

### DETAILED DESCRIPTION

The present disclosure relates to a multiple-slot milling tool, i.e. a rotary cutting tool for machining slot openings in metal workpieces, and more particularly to a multi-slot milling tool having replaceable cutting inserts secured to a plurality of disc-shaped tool bodies arranged along a tool shaft. Namely, a rotary cutting tool for machining slot openings in metal workpieces, comprising: a tool shaft; one or more disc-shaped tool bodies arranged on the shaft to rotate with said shaft; each disc-shaped tool body comprising a plurality of insert mounting locations, each mounting location being arranged for receiving a cutting insert removably mounted thereon; wherein the insert mounting locations are mounted irregularly-spaced around the periphery of each disc-shaped tool body

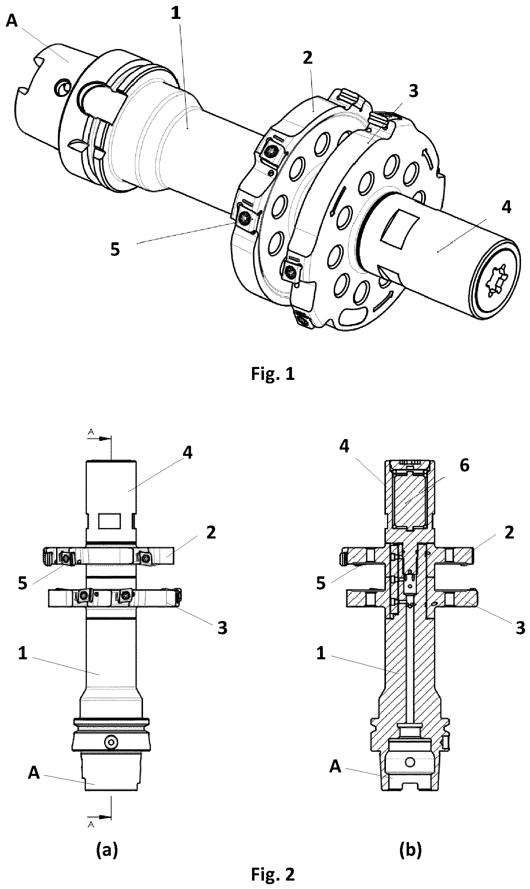

**Figure 1** shows a perspective view of a schematic representation of an embodiment of the disclosed rotary cutting tool where: **A** represents a tool coupling for coupling the disclosed rotary cutting tool to a rotary machine, **1** represents a tool shaft, **2** represents a first disc-shaped tool body, **3** represents a second disc-shaped tool body, **4** represents a stabilization body, and **5** represents a cutting insert.

**Figure 2** shows a lateral **(a)** and a cross-sectional **(b)** view of a schematic representation of an embodiment of the disclosed rotary cutting tool where: **A** represents a tool coupling for coupling the disclosed rotary cutting tool to a rotary machine, **1** represents a tool shaft, **2** represents a first disc-shaped tool body, **3** represents a second disc-shaped tool body, **4** represents a stabilization body, **5** represents a cutting insert, and **6** represents a removably mounted stabilization weight.

Preferably, the disc-shaped tool bodies **2, 3** are removably mounted on the tool shaft 1. In particular, the disc-shaped tool bodies **2, 3** have a central opening and are slidably mounted on the tool shaft **1** by insertion of tool shaft **1** in said central opening. Preferably, the disc-shaped tool bodies **2, 3** comprise an outcrop in the region of the shaft mounting for maintaining a predetermined distance between the disc-shaped tool bodies **2, 3.**

Preferably, the stabilization body **4** is coupled to the tool shaft **1** securing the disc-shaped tool bodies **2, 3.** In particular, the stabilization body **4** is threaded and screws to a matching thread of the tool shaft **1** to fasten the stabilization body **4** and the disc-shaped tool bodies **2, 3.**

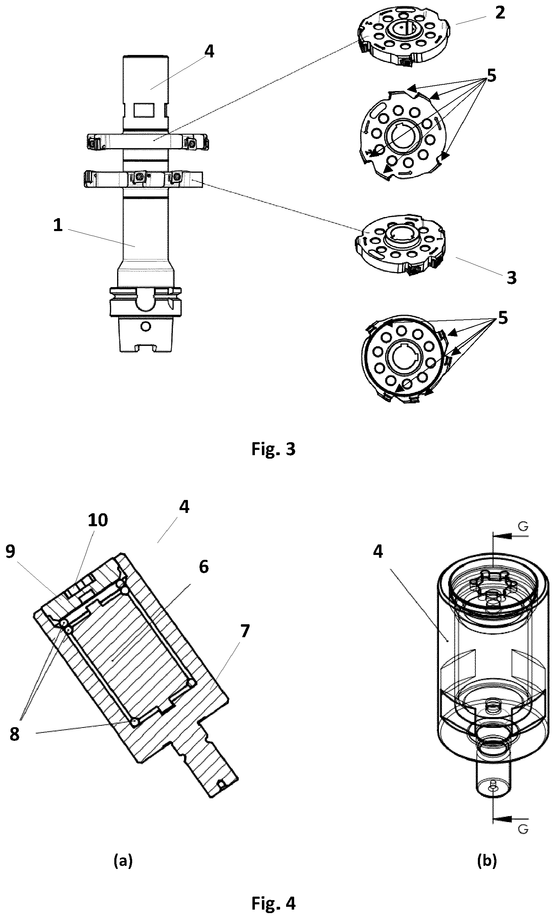

**Figure 3** shows an exploded view of a schematic representation of an embodiment of the disclosed rotary cutting tool where: **1** represents a tool shaft, **2** represents a first disc-shaped tool body, **3** represents a second disc-shaped tool body, **4** represents a stabilization body, and **5** represents cutting inserts, where the irregular circumferential distribution of the cutting inserts **5** is visible, within each disc-shaped tool body **2, 3** and also the irregular circumferential distribution of the cutting inserts between both disc-shaped tool bodies **2, 3.** The cutting insert mounting locations are thus irregularly-spaced around the periphery of each disc-shaped tool body (2,3). Also, when existing more than one disc-shaped tool body (2,3), each cutting insert mounting locations is unaligned, along a longitudinal axis of the rotary cutting tool, with any other cutting insert mounting location.

**Figure 4** shows a lateral view **(a)** and a cross-sectional view **(b)** view of a schematic representation of an embodiment of the disclosed stabilization body where: **4** represents the stabilization body, **6** represents a removably mounted stabilization weight, **7** represents a hollow body for receiving the stabilization weight **6,** and **8** represents an elastic or resilient connection between the hollow body **7** and the stabilization weight **6.** A fixation lid **9** is also represented for enclosing the hollow body **7** and the stabilization weight **6** within the hollow body **7,** and to maintain pressure between the elastic or resilient connection **8** between the hollow body **7** and the stabilization weight **6.** The fixation lid **9** has a recessed hexagonal socket **10** for receiving a matching tool to drive the fixation lid **9** into the hollow body **7.** The stabilization body **4** comprises a coupling **B** for attaching the stabilization body to the distal part of the tool shaft in respect of the proximal tool coupling **A.**

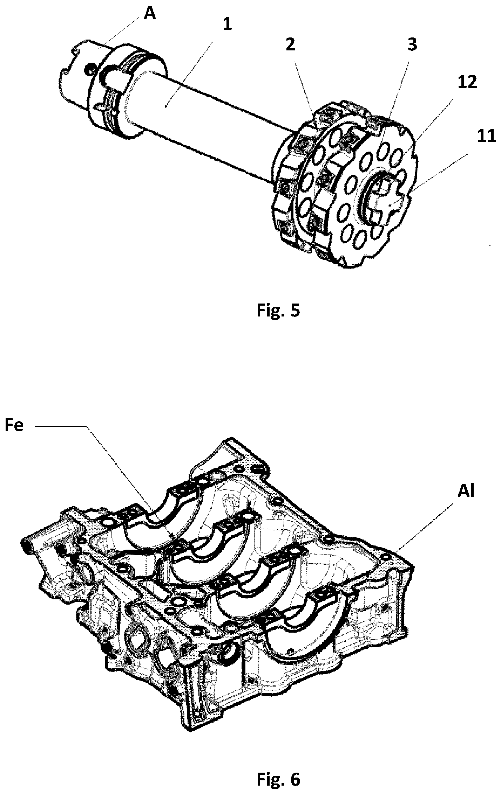

**Figure 5** shows a perspective view of a schematic representation of an embodiment of the disclosed rotary cutting tool without the stabilization body, where: 1 represents the tool shaft, **2** represents the first disc-shaped tool body, **3** represents the second disc-shaped tool body, **12** represents a threaded coupling of the tool shaft **1,** and **11** represents a holding nut for holding the disc-shaped tool bodies **2, 3** in place.

**Figure 6** shows a perspective view of a schematic representation of a workpiece of the present disclosure where: **Fe** represents cast iron and **Al** represents aluminium.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof.

The above described embodiments are combinable.

The following claims further set out particular embodiments of the disclosure.

## Claims

1. A rotary cutting tool for machining slot openings in metal workpieces, comprising:
a tool shaft (1);
one or more disc-shaped tool bodies (2,3) arranged on the shaft (1) to rotate with said shaft (1);
each disc-shaped tool body (2, 3) comprising a plurality of insert mounting locations, each mounting location being arranged for receiving a cutting insert (5) removably mounted thereon;
wherein the insert mounting locations are mounted irregularly-spaced around the periphery of each disc-shaped tool body (2,3).

2. The rotary cutting tool according to the previous claim comprising a plurality of said disc-shaped tool bodies (2,3).

3. The rotary cutting tool according to the previous claim wherein the insert mounting locations between the plurality of disc-shaped tool bodies (2,3) are longitudinally unaligned.

4. The rotary cutting tool according to any of the previous claims wherein a proximal end of said tool shaft (1) is arranged to be coupled to a milling machine and further comprising a stabilization body (4) arranged on a distal end of said tool shaft.

5. The rotary cutting tool according to the previous claim further comprising a stabilization weight (6) removably mounted on the stabilization body (4), in particular the stabilization body (4) comprising a hollow body (7) for receiving the stabilization weight (6).

6. The rotary cutting tool according to the previous claim comprising a resilient coupling (8) between the stabilization body (4) and the stabilization weight (6), in particular wherein the resilient coupling (8) is partially or fully elastic.

7. The rotary cutting tool according to the previous claim wherein the resilient coupling (8) has adjustable elasticity, in particular wherein the elastic coupling has an adjustable elastic constant.

8. The rotary cutting tool according to any of the claims 6-8 wherein the resilient coupling (8) comprises a compressible polymeric part arranged to be compressed between the stabilization body (4) and the stabilization weight (6).

9. The rotary cutting tool according to any of the claims 6-9 comprising a retainer (9) for retaining the stabilization weight (6) coupled to the stabilization body (4) and arranged to apply an adjustable compression to the resilient coupling (8), preferably claim wherein the retainer (9) is a lid with a coupling thread for coupling to a corresponding coupling thread of the stabilization body (4).

10. The rotary cutting tool according to claim 8 or 11 wherein the retainer (9) comprises a keyed receiving recess (10) for receiving a keyed tool for screwing or unscrewing the retainer (9) into or from the stabilization body (4).

11. The rotary cutting tool according to any of the previous claims comprising a fixation nut (11) for holding the disc-shaped tool bodies (2,3) on the shaft (1).

12. The rotary cutting tool according to the previous claim and according to any of the claims 4-12 wherein the stabilization body (4) is arranged as a fixation nut for holding the disc-shaped tool bodies (2,3) on the shaft (1).

13. The rotary cutting tool according to claim 13 or 14 wherein the fixation nut (11) or the stabilization body (4) comprise a coupling thread (12) for coupling to a corresponding coupling thread of the tool shaft (1).

14. The rotary cutting tool according to any of the claims 5-15 comprising guiding protrusions and matching recesses between the stabilization body (4) and the stabilization weight (6) for guiding longitudinally the stabilization weight (6) in respect of the stabilization body (4).

15. The rotary cutting tool according to any of the previous claims wherein the rotary cutting tool is a slot milling tool.
